# EUROPEAN PATENT SPECIFICATION

(11) **EP 0 665 858 B1**
(45) Date of publication and mention of the grant of the patent: **21.01.1998**
(21) Application number: 93923533.9
(22) Date of filing: 21.10.1993
(51) Int. Cl.: C08G 63/06, C08G 63/40

(54) **PROCESS FOR PREPARING ALIPHATIC POLYESTERS**
VERFAHREN ZUR HERSTELLUNG VON ALIPHATISCHEN POLYESTERN
PROCEDE DE PREPARATION DE POLYESTERS ALIPHATIQUES

(30) Priority: 22.10.1992 EP 92203256
(43) Date of publication of application: 09.08.1995
(73) Proprietor: SHELL INTERNATIONALE RESEARCH MAATSCHAPPIJ B.V., 2596 HR Den Haag (NL)
(72) Inventor: MEURS, Jan, Hermen, Hendrik, NL-1031 CM Amsterdam (NL); DE JONG, Feike, NL-1031 CM Amsterdam (NL)
(86) International application number: PCT/EP93/02928
(87) International publication number: WO 94/09054

(56) References cited:
- EP-A- 0 287 007
- US-A- 2 676 945

## Description

The invention relates to a process for preparing aliphatic polyesters.

Many types of reactions can be used to synthesise polyesters, but the most important, conceptually and practically, are those where the molecular chain is built up by formation of an ester linkage at each step. Synthesis based on ester-group formation are of two main types: step-polyesterification reactions of bifunctional reactants (also called polycondensation reactions as water is deliberated) and ring-opening polymerization of cyclic esters. Both reactions occur until equilibrium is reached. Step-polyesterification and ring formation of cyclic esters are closely interrelated as they take place concurrently. For these reasons, it is not always possible to produce polyesters of high molecular weight and/or of sufficient purity.

When producing aliphatic polyesters of a degree of polymerization of approximately 20 or below, it is normally sufficient to allow the water of reaction to be driven off at the temperature of reaction, with the assistance of stirring and the passage of a current of dry inert gas. Higher molecular weights require the use of azeotropic entrainment or reduced pressure to press the reactions forward.

Moreover, as these reactions proceed at relatively high temperatures, there is a risk of thermal degradation during the several hours usually required for the product to reach the desired molecular weight. For instance polyesters of oxalic or malonic acid readily decarboxylate, 3-hydroxypropionic acids readily dehydrate, and cis-vinylene or cis-substituted alicyclic reactants readily isomerize or cross-link.

Instead of step-polycondensation, some aliphatic (biodegradable) polyesters are produced via ringopenings polymerization. However, this technique requires expensive cyclic monomers. Moreover, it is limited to cyclic monomers of certain ring size.

It is also possible to prepare polyesters via the reaction of a (bis)acyl chloride with a (bis)trimethylsilyl ether, producing trimethylsilyl chloride as coproduct. This reaction is described by Kricheldorf et al in both Polymer 23, 1821 (1982) and Macromol. Chem. 184, 475 (1983). This reaction too is carried out at high temperatures in either the melt or in an inert solvent. Moreover, silylated compounds are relatively expensive, further diminishing the applicability of reaction.

Therefore there is a need for an economically attractive, industrial bulk manufacturing process using cheap(er) starting materials and operating under attractive economical, environmental and safe conditions, i.e. using rather simple equipment and resulting in a significant reduction of the cost price of the aliphatic polyester. Consequently considerable research and development efforts have been made for an improved manufacturing process for these polyesters. Surprisingly, such a new reaction has now been found, which reaction permits the rapid production of aliphatic polyesters of high molecular weight, many of which could previously not have been made, or not have been made in a commercially feasible fashion.

The present invention provides a process for preparing aliphatic polyesters through acylative ether cleavage in the presence of a Lewis acid, wherein the or each monomer is selected from
(i) aliphatic compounds containing at least one arylmethoxy group ("ArCR₂O-", wherein Ar represents an aryl group and each R independently represents hydrogen or an hydrocarbyl group) and at least one halocarbonyl group ("-C(=O)X", wherein X represents a halogen atom), or
(ii) a mixture of
   (a) aliphatic compounds containing at least two arylmethoxy groups, and
   (b) aromatic and/or aliphatic compounds containing at least two halocarbonyl groups.

Preferably the or each monomer is a bifunctional compound. Using (a stoichiometric amount of) bifunctional monomers, the process of the present invention yields a linear polyester of considerable degree of polymerization. However, some monofunctional compounds, to moderate the degree of polymerization, may also be added.

More preferably, the or each monomer (i) contains one arylmethoxy group and one halocarbonyl group per molecule. A preferred example of such a monomer (i), is a compound having the general formula (I)

ArCH₂O-A-C(=O)X, (I)

wherein X is a chlorine or bromine atom, and A is an aliphatic, optionally-substituted, inert bridging hydrocarbyl group. Note that A-C(=O) (printed in bold) is the repeating unit forming the backbone of the subsequent aliphatic polyester.

Alternatively, the or each monomer (ii)(a) is a bifunctional compound having the general formula (II)(a)

ArCH₂O-A-OCH₂Ar, (II)(a)

and the or each monomer (ii)(b) is a compound having the general formula (II)(b)

XC(=O)-B-C(=O)X, (II)(a)

wherein Ar, A and X have the meaning defined hereinbefore, and B represents an aromatic or aliphatic, optionally-substituted, inert bridging hydrocarbyl group.

Suitably A and B are each a bridging hydrocarbyl group having 2 to 20 carbon atoms in its backbone, and may further contain up to 5, preferably up to 2, hetero (not hydrogen or carbon) atoms, especially oxygen, sulphur or (alkylated) nitrogen atoms, preferably oxygen atoms, in its backbone. Note that with aliphatic (group A) is not excluded a hydrocarbyl group having a conjugated and/or aromatic system contained therein and/or attached thereto, as long as such system is at least two carbon atoms away from the functional groups. Where B represents an aliphatic bridging hydrocarbyl group, B need not but may be the same as A.

Some functional groups, e.g. certain nitrogen-containing groups and hydroxyl groups, are known to react with the halocarbonyl group and/or the catalyst. Such groups should therefore generally be avoided as substituents to, or as part of the bridging hydrocarbyl groups A and B.

Preferably, A and B are each a bridging hydrocarbyl group having in total 3 to 10 carbon atoms in its backbone and (optionally) its substituents. More preferably A and B are each a bridging hydrocarbyl group having up to 6 carbon atoms in the backbone.

Ar preferably represents an optionally substituted phenyl group, R preferably represents a hydrogen atom or an alkyl group comprising 1 to 6 carbon atoms, more preferably a hydrogen atom or a methyl or ethyl group.

Examples of highly preferred monomers of type (i) are the benzyl ethers of glycolic acid chloride, propionic acid chloride and valeric acid chloride, the benzyl ether of glycolic acid chloride, "benzyloxyacetyl chloride" (hereinafter "BOAC") being most preferred. The most preferred product of the process in accordance with the invention is then polyglycolic polyester (also called polyglycolide).

Examples of highly preferred monomers of type (ii) are the dibenzyl ether of butanediol (type (ii)(a)), and adipoyl dichloride and terephthaloyl dichloride (type (ii)(b)).

It is considered surprising that acylative ether cleavage of the aliphatic ether compound (i.e., the compound containing the arylmethoxy group) is sufficiently selective to result in the (sole) production of a polyester. Thus, it is noted that each ether group has two carbon-oxygen bonds that may be cleaved, whereas in addition both the arylmethoxy group and the halocarbonyl group may undergo other (side) reactions. In the literature (e.g., European patent No.287,007; J. Am. Chem. Soc., 90, 3878 (1968); Bull Soc. Chim. Fr., 2788 (1967); J. Chem. Soc., B, 7, 745-51 and 8, 856-9 (1986); Chem. Revs., 54, 615 (1954); and Synthesis, 249-181 (1980)) this unselective reaction and similar reactions have been given much attention. Accordingly, one would expect that aliphatic compounds containing a plurality of arylmethoxy groups and/or halocarbonyl groups will undergo a manifold of different reactions when they are brought into reaction. Polymerization, requiring propagation beyond a polymerization degree of at least 3, could hardly be expected. This would render the process quite useless, as oligomeric by-products would be hard to remove. Therefore, it is indeed highly surprising that the reaction proceeds via polymerization, essentially without any competing side-reactions.

It is further noticed that the reaction conditions for preparing the aliphatic polyester are mild, e.g. the reaction can be carried out at a temperature between 20 and 150 °C. Below 20 °C, the reaction is slow to initiate. As it is a highly exothermic reaction, the reaction temperature will thereafter quickly rise. Above 150 °C, the reaction is generally too fast to be carried out safely. Moreover, this temperature being close to the degradation temperature of some aliphatic polyesters, there is a considerable risk of thermal degradation of the polymer.

The reaction is carried out in the presence of a catalytic amount of a Lewis acid. Under a catalytic amount is here to be understood from 0.1 to 5 %wt (on total weight) of a Lewis acid although higher amounts, e.g. up to 20% or even 50%, may be used. Particularly suitable Lewis acids are stannic tetrachloride, zinc dichloride, ferric chloride, aluminium chloride and boron bromide.

Sometimes the presence of a solvent is also desirable to decrease the catalytic activity to a suitable level. A suitable solvent does not react with the reactants and/or product, dissolves both the starting compounds and the resulting polymer, and is essentially inert vis-à-vis the catalyst (albeit that some catalyst-solvent complexes will even perform better as catalyst, most will render the catalyst ineffective). Halogenated hydrocarbons e.g. chlorobenzene and tetrachloroethane, but also aromatic hydrocarbons such as toluene and xylene are often a good choice.

The reaction is preferably carried out at atmospheric pressure in an inert atmosphere vis-à-vis the reactants.

The process according to the present invention provides inter alia high molecular weight polyglycolide, which should easily compete with polyglycolide made by polymerizing glycolide with a tin(II) catalyst (e.g., as disclosed in US-A-3,912,692). Polyglycolide is for instance used for sutures, being melt-spun to multifilament yarns, that are absorbed by random hydrolysis in tissue fluids.

Alternatively, the method may provide an attractive route for preparing photo-crosslinkable polyesters, that require sequences of conjugated double bonds (chromophores).

It is noted that most monomers suitably applied in the present process are commercially available, or else easily made by adapting the standard production processes. Thus, the compounds containing an arylmethoxy group are generally prepared by the Williamson synthesis (starting with e.g., benzyl bromide and an alcohol), whereas the compounds containing a halocarbonyl group are generally prepared from the corresponding acids by reaction with thionyl halide, phosphorus trihalide or phosphorus pentahalide. Compounds containing both an arylmethoxy group and a halocarbonyl group are suitably prepared by converting compounds containing the former group into the corresponding halocarbonyl derivative.

### EXAMPLE 1

### Benzyloxyacetic acid, BOAA

Potassium-t-butylate (K^{t}Bu, 1.1 mol, 134 g) was dissolved in benzylalcohol (500 ml) under nitrogen and heated to 80 °C. Then ethyl bromoacetate (1.0 mol, 167 g) was added in 0.5 hrs. After stirring for another 2 hrs., KOH (1.2 mol, 79 g) in water (100 ml) was added and the mixture stirred for 2 hrs. at 80 °C. The solvent was subsequently evaporated at reduced pressure.

The residue was stirred with ethanol (400 ml) and filtrated. The filter cake was rinsed with ethanol (200 ml), diethylether (2x200 ml) and dissolved in water (400 ml). To the solution 33% HCl was added up to a pH of 2. The aqueous layer was subsequently extracted with diethylether, and the etheral layer was then extracted with water (2x200 ml) and dried over MgSO₄. The solvent was evaporated and the residue distilled. After a forerun of 5.2 g, 112 g (67%) of BOAA was collected.

Analytical data: bp. 132-134 °C/0.3 mm; ¹H-NMR (CDCl₃):
4.15 (2H); 4.65 (2H); 7.36 (5H); 8.2 (OH).

### Benzyloxyacetyl chloride, BOAC

SOCl₂ (0.15 mol, 17.9 g) was added (under nitrogen) to BOAA (0.05 mol, 8.31 g) in 1,1,2,2-tetrachloroethane (TCE, 10 ml). After standing for 16 hrs. at room temperature, the mixture was stirred at 60 °C for 2hrs. At reduced pressure, the excess of SOCl₂ was distilled off together with TCE.

Analytical data: ¹H-NMR: 7.41 (5H); 4.65 (2H) and 4.42 (2H).

### Polyglycolic acid, polymer of benzyloxyacetyl chloride

SnCl₄ (0.2g) was added to the above BOAC and the mixture was stirred at 60 °C for 1.5 hrs. The polymeric product was precipitated by addition of methanol (50 ml), after which it was collected by filtration. The remaining solid was further purified by again dissolving it in 80 ml of a 30/70 mixture of 1,1,1,3,3,3-hexafluoro-2-propanol (HF-ipa) and CHCl₃, and precipitating it with methanol (150 ml). After filtration, rinsing with CH₂Cl₂ and drying, 0.94 g (32%) of polyglycolic acid was obtained.

Analytical data: DSC (10 °C/min): T ₘ - 212 °C, T _{c} -178 °C (4^{th} run, sharpest peaks); microscopy (hot stage, crossed polarizers): consistent with DSC; ¹H-NMR (CDCl₃/HF-ipa, 2:3): 4.86 (End-groups not visible); and IR (nujol): 1736 cm⁻¹.

### EXAMPLE 2

### 3-Benzyloxypropionic acid, BOPA

To a stirred solution of ethylacrylate (0.5 mol, 50.0 g) in benzylalcohol (2 mol, 216 g), K^{t}Bu (5 mmol, 0.61 g) was added at room temperature. After standing overnight, NaOH (0.55 mol, 22 g) in water (100 ml) was added. The solution was stirred for 2 hrs. at 50 °C and cooled to room temperature. Water (300 ml) was added and the mixture extracted with CH₂Cl₂ (1x500 ml, 4x150 ml). The aqueous layer was evaporated and the residue washed with diethylether (4x100 ml). The white solid was dissolved in water (300 ml) and acidified with 33% HCl up to a pH of 2. On cooling (0 °C), the acid solidified. It was filtrated, rinsed with cold water, and dissolved in diethylether. After drying over MgSO₄, the ether was evaporated. The acid was recrystallized from pentane/toluene and dried in a stream of nitrogen., resulting in 64.3 g (71%) of product.

Analytical data: mp. 35.2 °C; ¹H-NHR (CDCl₃): 2.68 (2H^{t,6.3}); 3.77 (2H^{t,6.3}) 4.57 (2H); 7.35 (5H); 10.8 (OH).

### 3-Benzyloxypropionyl chloride, BOPC

SOCl₂ (0.10 mol, 12.0g, freshly distilled) was added (under nitrogen) to BOPA (0.050 mol, 9.0g), whereupon the mixture was left standing for 16 hrs at room temperature. TCE (10ml, distilled) was added and the reaction mixture was stirred for 1 hr. The excess of SOCl₂ together with TCE were distilled off at reduced pressure.

Analytical data (pure BOPC): ¹H-NMR (CDCl₃): 3.14 (2H); 3.77 (2H) 4.54 (2H); 7.33 (5H).

### Polymer of 3-benzyloxypropionyl chloride

SnCl₄ (0.5 ml of a solution of 4 g in 20 ml TCE) was added to the above 3-benzyloxypropionyl chloride and the mixture was stirred at 60 °C. The acid chloride was found (by NMR) to be quantitative converted within 5 minutes. After stirring for 30 min., methanol (500 ml) was added.

The solvent was removed by decantation. The residue was dissolved in TCE (50 ml) and poured into methanol (200 ml). A nearly white precipitate was collected and dried in a stream of nitrogen, giving 2.65g (74%) of polymer.

Analytical data: ¹H-NHR (CDCl₃): 2.64 (2H), 4.35 (2H), (endgroups not visible); IR (nujol): 1720-1738 cm⁻¹ (C=O, ester); Microscope (10 °C/min): Complete isotropization at 87 °C, crystallization started at 56 °C; DSC (10 °C/min): Tₘ 75 °C (no crystallization observed); N_{w} (GPC): 17,500.

### Example 3

### 1,4-Dibenzyloxybutane (DBOB)

K^{t}Bu (0.55 mol, 67,1 g) was dissolved in benzylalcohol (250 ml) at room temperature under nitrogen. Then 1,4-dibromobutane (0.25 mol, 54.0 g) was added in lhr at room temperature with stirring. The temperature was raised in 1 hr to 80 °C and stirring was continued for 7 hrs. After cooling, diethylether was added (200 ml) and the mixture extracted with water (3x200 ml). The etheral layer was dried over MgSO₄, and ether and excess of benzylalcohol were distilled off. The residue was filtrated over a column of silicagel (pentane/ether; 4:1) and the solvent evaporated. This sequence was repeated once, using pentane as eluens. After evaporation of the solvent, 32.0 g (47%) of pure product (DBOB) was obtained.

Analytical data: Mp. 18 °C; ¹H-NMR (CDCl₃): 1.71 (4H); 3.49 (4H); 4.50 (4H); 7.32 (10H).

### Copolymer of DBOB and terephthaloyl dichloride

Terephthaloyl dichloride (5.0 mmol, 1.015 g) and DBOB (5.0 mmol, 1.35 g) were dissolved in TCE (10 ml) and heated to 110 °C. Then SnCl₄ (0.2 ml of a solution of 4 g in 20 ml TCE) was added and the mixture stirred. Benzyl chloride formation started immediately and within 30 min. the conversion of DBOB was nearly complete. After stirring for another 4 hrs., methanol (100 ml) was added and the mixture filtrated. The solid was stirred with CH₂Cl₂ (100 ml). Again, methanol (100 ml) was added and the mixture filtrated. After drying, the polymer was stirred with CH₂Cl₂, filtrated and dried, resulting in 1.00 g (95%) of polymer.

Analytical data: DSC (10 °/min): T ₘ -208 °C (broad), T _{c} -183 °C (sharp); Microscopy (hot stage, crossed polarizers): consistent with DSC; ¹H-NMR (HF-ipa/CDCL₃, 1:5): 1.96 (4H), ca.4.40 (4H), 8.07 (4H); (endgroups not visible); IR (nujol): 1710 cm⁻¹.

### Copolymer of DBOB and adipoyl dichloride

Adipoyl dichloride (freshly distilled, 0.01 mol, 1.83 g) and DBOB (0.01 mol, 1.35 g) were dissolved in TCE (8 ml). Then, at 60 °C, SnCl₄ (0.2 ml of a solution of 4 g in 20 ml TCE) was added and the mixture stirred. After 15 minutes the conversion of DBOB was nearly complete and benzyl chloride was formed. After stirring for another hour, the reaction mixture was cooled to room temperature, methanol (150 ml) was added and the precipitated polymer was collected and dried in a stream of nitrogen (1.44 g, 76%).

Analytical data: ¹H-NMR (CDCl₃): 1.58-1.70 (8H), 2.30 (4H), 4.06 (4H), (endgroups not visible); IR (nujol): 1738 cm⁻¹; M_{w} (GPC): 15,400.

## Claims

1. A process for preparing aliphatic polyesters through acylative ether cleavage in the presence of a Lewis acid of one or more monomers, wherein the or each monomer is selected from
(i) aliphatic compounds containing at least one arylmethoxy group ("ArCR₂O-", wherein Ar represents an aryl group and each R independently represents hydrogen or an hydrocarbyl group) and at least one halocarbonyl group ("-C(=O)X", wherein X represents a halogen atom), or
(ii) a mixture of
(a) aliphatic compounds containing at least two arylmethoxy groups, and
(b) aromatic and/or aliphatic compounds containing at least two halocarbonyl groups.

2. A process as claimed in claim 1, wherein the or each monomer is a bifunctional compound.

3. A process as claimed in claim 1, wherein the or each monomer (i) contains one arylmethoxy group and one halocarbonyl group per molecule.

4. A process as claimed in claim 3, wherein the or each monomer (i) is a compound having the general formula (I)
ArCH₂O-A-C(=O)X, (I)
wherein X is a chlorine or bromine atom, and A is an aliphatic, optionally-substituted, inert bridging hydrocarbyl group.

5. A process as claimed in claim 1, wherein the or each monomer (ii)(a) is a compound having the general formula (II)(a)
ArCH₂O-A-OCH₂Ar, (II)(a)
and wherein the or each monomer (ii)(b) is a compound having the general formula (II)(b)
XC(=O)-B-C(=O)X, (II)(a)
wherein Ar, A and X have the meaning defined hereinbefore, and B represents an aromatic or aliphatic, optionally-substituted, inert bridging hydrocarbyl group.

6. A process as claimed in claim 1 wherein the monomer (i) is benzyloxyacetyl chloride, or benzyloxypropionyl chloride.

7. A process as claimed in claim 1 wherein the monomer (ii)(a) is dibenzyloxybutane, and wherein the or each monomer (ii)(b) is adipoyl dichloride, or terephthaloyl dichloride.

8. A process as claimed in anyone of claims 1 to 7, wherein the reaction is carried out in the presence of SnCl₄.

## Patentansprüche

1. Verfahren zur Herstellung von aliphatischen Polyestern durch acylierende Etherspaltung eines oder mehrerer Monomere in Anwesenheit einer Lewis-Säure, worin das oder jedes Monomer ausgewählt ist aus
(i) aliphatischen Verbindungen, die wenigstens eine Arylmethoxygruppe ("ArCR₂-O-", worin Ar eine Arylgruppe bedeutet und jedes R unabhängig voneinander Wasserstoff oder eine Hydrocarbylgruppe darstellt) und wenigstens eine Halogencarbonylgruppe ("-C(=O)X", worin X ein Halogenatom darstellt) enthält, oder
(ii) einem Gemisch aus
a) aliphatischen Verbindungen mit einem Gehalt an wenigstens 2 Arylmethoxygruppen und
b) aromatischen und/oder aliphatischen Verbindungen mit einem Gehalt an wenigstens 2 Halogencarbonylgruppen.

2. Verfahren nach Anspruch 1, worin das oder jedes Monomer eine bifunktionelle Verbindung ist.

3. Verfahren nach Anspruch 1, worin das oder jedes Monomer (i) eine Arylmethoxygruppe und eine Halogencarbonylgruppe je Molekül enthält.

4. Verfahren nach Anspruch 3, worin das oder jedes Monomer (i) eine Verbindung mit der allgemeinen Formel (I)
ArCH₂O-A-C(=O)X, (I)
ist, worin X ein Chlor- oder Bromatom darstellt und A für eine aliphatische, gegebenenfalls substituierte, inerte Hydrocarbylbrückengruppe steht.

5. Verfahren nach Anspruch 1, worin das oder jedes Monomer (ii) (a) eine Verbindung mit der allgemeinen Formel (II)(a)
ArCH₂O-A-OCH₂Ar (II)(a)
ist und worin das oder jedes Monomer (ii) (b) eine Verbindung mit der allgemeinen Formel (II)(b)
XC (=O)-B-C(=O) X (II)(b)
ist, worin Ar, A und X die zuvor definierten Bedeutungen haben und B für eine aromatische oder aliphatische gegebenenfalls substituierte, inerte Hydrocarbylbrückengruppe steht.

6. Verfahren nach Anspruch 1, worin das Monomer (i) Benzyloxyacetylchlorid oder Benzyloxypropionylchlorid ist.

7. Verfahren nach Anspruch 1,, worin das Monomer (ii) (a) Dibenzyloxybutan ist und worin das oder jedes Monomer (ii) (b) Adipoyldichlorid oder Terephthaloyldichlorid ist.

8. Verfahren nach einem der Ansprüche 1 bis 7, worin die Reaktion in Anwesenheit von SnCl₄ ausgeführt wird.

## Revendications

1. Procédé de préparation de polyesters aliphatiques par un clivage d'éther acylant en présence d'un acide de Lewis d'un ou plusieurs monomères, dans lequel le ou chaque monomère est choisi parmi
(i) les composés aliphatiques contenant au moins un groupe arylméthoxy ("ArCR₂O-", dans lequel Ar représente un groupe aryle et chaque R représente indépendamment de l'hydrogène ou un groupe hydrocarbyle) et au moins un groupe halocarbonyle ("-C(=O)X", dans lequel X représente un atome d'halogène), et
(ii) un mélange de
(a) composés aliphatiques contenant au moins deux groupes arylméthoxy, et
(b) composés aromatiques et/ou aliphatiques contenant au moins deux groupes halocarbonyle.

2. Procédé suivant la revendication 1, dans lequel le ou chaque monomère est un composé bifonctionnel.

3. Procédé suivant la revendication 1, dans lequel le ou chaque monomère (i) contient un groupe arylméthoxy et un groupe halocarbonyle par molécule.

4. Procédé suivant la revendication 3, dans lequel le ou chaque monomère (i) est un composé ayant la formule générale (I):
ArCH₂O-A-C(=O)X, (I),
dans laquelle X est un atome de chlore ou de brome et A est un groupe hydrocarbyle de pontage inerte, aliphatique, éventuellement substitué.

5. Procédé suivant la revendication 1, dans lequel le ou chaque monomère (ii)(a) est un composé ayant la formule générale (II)(a):
ArCH₂O-A-OCH₂Ar, (II)(a)
et dans lequel le ou chaque monomère (ii)(b) est un composé ayant la formule générale (II)(b):
XC(=O)-B-C(=O)X, (II)(b)
dans lesquelles Ar, A et X ont la signification donnée précédemment et B représente un groupe hydrocarbyle de pontage inerte, aromatique ou aliphatique, éventuellement substitué.

6. Procédé suivant la revendication 1, dans lequel le monomère (i) est du chlorure de benzyloxyacétyle ou du chlorure de benzyloxypropionyle.

7. Procédé suivant la revendication 1, dans lequel le monomère (ii)(a) est le dibenzyloxybutane et dans lequel le ou chaque monomère (ii)(b) est le dichlorure d'adipoyle ou le dichlorure de téréphtaloyle.

8. Procédé suivant l'une quelconque des revendications 1 à 7, dans lequel la réaction est réalisée en présence de SnCl₄.
